Europäisches Patentamt

**European Patent Office**

Office européen des brevets

(11) Numéro de publication: **0 251 873 B1**

## FASCICULE DE BREVET EUROPEEN

(45) Date de publication de fascicule du brevet:
26.06.91

(51) Int. Cl.⁵: **D21F 7/10**, D21F 1/00,
F16G 3/02

(21) Numéro de dépôt: **87401409.5**

(22) Date de dépôt: **22.06.87**

(54) **Feutre ouvert pour partie humide.**

(30) Priorité: 26.06.86 FR 8609273

(43) Date de publication de la demande:
07.01.88 Bulletin 88/01

(45) Mention de la délivrance du brevet:
26.06.91 Bulletin 91/26

(84) Etats contractants désignés:
AT BE CH DE ES FR GB GR IT LI LU NL SE

(56) Documents cités:
EP-A- 0 012 519
EP-A- 0 108 733
GB-A- 2 090 788

(73) Titulaire: **COFPA COMPAGNIE DES FEUTRES POUR PAPETERIES ET DES TISSUS INDUS-TRIELS , Société Anonyme dite:**
**Route de Vars**
**F-16160 Le Gond Pontouvre(FR)**

(72) Inventeur: **Dufour, Marcel**
**18 rue Gérard Philipe**
**F-16710 Saint Yrieix(FR)**

(74) Mandataire: **Vigand, Privat et al**
**SOSPI 14-16, rue de la Baume**
**F-75008 Paris(FR)**

## Description

La présente invention concerne un feutre ouvert pour la partie humide d'une machine à fabriquer le papier comportant un canevas tissé comprenant plusieurs couches de fils s'étendant dans la direction de défilement du feutre reliées par des fils s'étendant dans une direction transversale à la direction de défilement, les fils s'étendant dans la direction de défilement du feutre se terminant par des boucles à chaque extrémité, les boucles des deux extrémités étant reliées ensemble.

Un tel feutre est décrit dans la demande EP-A-108 733.

Le feutre décrit comporte un canevas de deux couches mais il peut-être intéressant d'avoir quatre couches et plus pour accroître la capacité de logement pour l'eau extraite de la feuille.

Un tel feutre ouvert à quatre couches et plus présenterait selon les procédés de fabrication connus dans la zone de jonction une zone d'épaisseur moindre. Cette zone entraîne une réduction de porosité ainsi que des défauts dans la feuille de papier et des vibrations dans la machine.

Il est également connu de la demande EP-A-12 519 un feutre ouvert comportant une paire de couches de fils tissés terminée par une série de boucles dans lequel, sur la couche supérieure, est fixée une troisième couche munie d'une deuxième série de boucles, les deux séries de boucles étant reliées par deux joncs. Il s'ensuit que les boucles de la paire de couches sont espacées, les fils de la troisième couche venant écarter les fils formant les boucles. De plus les trames de la troisième couche ne forment pas un ensemble régulièrement réparti ce qui nuit à l'égouttage d'un feutre pour partie humide.

Il est connu de la demande GB-A-2 090 788 un feutre ouvert comportant deux paires de couches de fils tissés. Les fils de chaîne ne sont pas terminées par deux séries de boucles mais ils sont coupés à leurs extrémités et deux séries de boucles fermées par deux joncs sont agrafées sur ces extrémités.

Ce feutre est utilisé pour fabriquer du papier ondulé mais il ne serait pas possible en raison des différences de perméabilité dans la zone de jonction et des risques de marquage de l'utiliser en partie humide.

Le feutre ouvert selon l'invention ne présentant pas ces inconvénients est caractérisé en ce que le canevas est constitué de n paires de couches identiques avec n > 1, chaque paire de couches se terminant à chacune des extrémités par des boucles et formant chacune un canal, les n canaux identiques étant munis de joncs de même grosseur.

Le feutre selon l'invention présente de plus l'avantage d'avoir une bonne résistance à la traction dans sa zone de jonction.

Selon une réalisation préférentielle de l'invention les n canaux distincts sont situés les uns en-dessous des autres dans un plan perpendiculaire au sens de défilement.

La présente invention va maintenant être décrite plus en détail en se référant à un mode de réalisation particulier cité à titre d'exemple non limitatif et représenté par des dessins annexés.

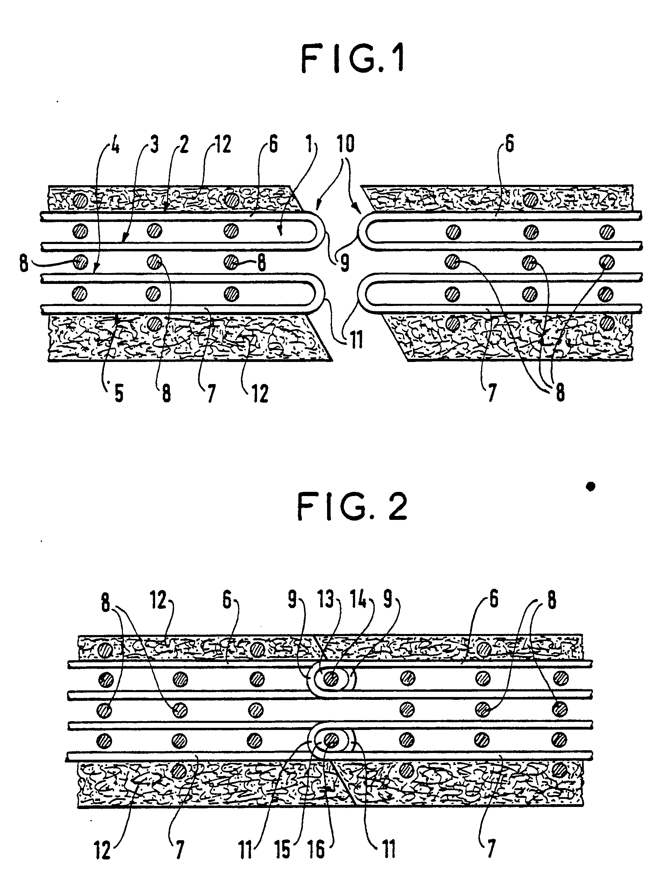

La figure 1 représente en coupe le feutre selon l'invention en position ouverte.

La figure 2 représente en coupe le feutre selon l'invention en position fermée.

Le feutre comporte un canevas 1 constitué de quatre couches 2, 3, 4, 5 de fils de chaîne 6 et 7 tissés avec des fils de trame 8.

Les couches 2 et 3 sont formées par des fils de chaîne 6 repliés et qui définissent des boucles 9 à chaque extrémité 10 du canevas 1.

Les couches 4 et 5 sont formées par des fils de chaîne 7 repliés qui définissent des boucles 11 à chaque extrémité 10.

Les couches 4 et 5 sont situées en dessous des couches 2 et 3 et les boucles 9 sont situées en dessus des boucles 11 à chaque extrémité 10. Le canevas est revêtu sur chaque face par une nappe 12.

Pour fermer le feutre, les boucles 9 des deux extrémités 10 sont interpénétrées et forment un canal 13 dans lequel on glisse un jonc 1, 4.

Les boucles 11 des deux extrémités 10 sont également interpénétrées et forment un canal 15, dans lequel on glisse un jonc 16.

Les canaux 13 et 15 sont situés dans des plans superposés parallèles au sens de défilement et de préférence l'un en dessous de l'autre dans un plan perpendiculaire au sens de défilement.

## Revendications

1. Feutre ouvert pour la partie humide d'une machine à fabriquer le papier comportant un canevas tissé (1) comprenant plusieurs couches (2, 3, 4, 5) de fils (6, 7) s'étendant dans la direction de défilement du feutre tissés avec des fils (8) s'étendant dans une direction transversale à la direction de défilement, les fils (6, 7) s'étendant dans la direction de défilement du feutre se terminant par des boucles (9, 11) à chaque extrémité (10), les boucles (9, 11) des deux extrémités (10) s'interpénétrant pour définir plusieurs canaux distincts (13, 15) situés les uns en dessous des autres dans un plan perpendiculaire au sens de défilement et dans lesquels sont disposés des joncs (14, 16) caractérisé en ce que le canevas (1) est constitué de n paires de couches identiques avec n >1, chaque paire de couches (2, 3, 4, 5) se terminant à chacune des extrémités (10) par des boucles (9, 11) et formant chacune un canal (13, 15), les n canaux identiques (13, 15) étant munis de joncs de même grosseur (14, 16).

## Claims

1. An open felt for the wet portion of a papermaking machine, the felt including a woven backing cloth (1) comprising a plurality of layers (2, 3, 4, 5) of threads (6, 7) extending in the travel direction of the felt and woven with threads (8) extending in a direction transverse to the travel direction, the threads (6, 7) extending in the felt travel direction being terminated by loops (9, 11) at each end (10), the loops (9, 11) at the two ends (10) interpenetrating to define a plurality of distinct channels (13, 15) situated beneath one another in a plane perpendicular to the travel direction and in which rods (14, 16) are disposed, the felt being characterized in that the backing cloth (1) is constituted by n pairs of identical layers where n > 1, each pair of layers (2, 3, 4, 5) being terminated at each of its ends (10) by loops (9, 11) and each forming one of the channels (13, 15), the n identical channels (13, 15) being provided with same-size rods (14, 16).

## Ansprüche

1. Offener Filz für die Näßpartie einer Papiermaschine, der einen gewebten Kanevas (1) mit mehreren Schichten (2,3,4,5) Fäden (6,7); enthält, die sich in Ablaufrichtung des Filzes erstrecken und mit Fäden (8) verwebt sind, die quer zur Ablaufrichtung laufen, wobei die in Ablaufrichtung des Filzes laufenden Fäden (6,7) an jedem Ende (10) in Schlingen (9,11) enden, wobei die Schlingen (9,11) der beiden Enden (10) ineinander verschlungen sind, um mehrere Kanäle (13,15) zu bilden, welche in einer zur Ablaufrichtung senkrecht liegenden Ebene untereinander liegen und in welchen Stäbe (14,16) angeordnet sind, dadurch gekennzeichnet, daß der Kanevas (1) aus n gleichen Schichtenpaaren mit n >1 besteht, wobei jedes Schichtenpaar (2,3,4,5) an jedem Ende (10) in Schlingen (9,11) endet und jeweils einen Kanal (13,15) bildet, wobei die n gleichen Kanäle (13,15) mit Ringen gleicher Größe (14,16) versehen sind.

# FIG.1

# FIG. 2